# EUROPEAN PATENT APPLICATION

(11) **EP 2 843 553 A2**
(43) Date of publication of application: **04.03.2015**
(21) Application number: 14181420.2
(22) Date of filing: 19.08.2014
(51) Int. Cl.: G06F 9/54

(54) **Information processing terminal and control method therefor, and program**

(30) Priority: 30.08.2013 JP 2013180356
(71) Applicant: CANON KABUSHIKI KAISHA, Ohta-ku Tokyo 146-8501 (JP)
(72) Inventor: Igarashi, Toshiaki, Ohta-ku, Tokyo (JP)
(74) Representative: Uffindell, Christine Helen

(57) **Abstract**

An information processing terminal (102) having a relay function of causing a client (101) for managing data and a service (103) for providing a function using the data managed by the client (101) to cooperate with each other via a network (107), comprising: receiving means (651) for receiving function information for calling the function provided by the service (103); register means (654, 655) for executing registration processing of the function information by the relay function in accordance with first classification information indicating a category of the function, and second classification information indicating detail classification of the first classification information; and providing means (654) for providing the function information registered by the registration processing to a user based on the second classification information.

## Description

### BACKGROUND OF THE INVENTION

### Field of the Invention

The present invention relates to an information processing terminal and a control method therefor, and a program and, more particularly, to a technique of providing a service using a mechanism such as Web Intents.

### Description of the Related Art

Conventionally, when transferring processing between Web sites, a function calling side needs to know the API (Application Programming Interface) of a function providing side, and a method of calling a function such as a REST interface. To implement cooperation with a different Web site, therefore, the function calling side needs to perform processing on the calling side according to calling protocols. In order for the function calling side to use the function, authentication on the function providing side is often required. Therefore, the function calling side needs to hold authentication information of the function providing side, and use authentication infrastructure such as SAML (Security Assertion Markup Language). Note that if authentication information is held, it is required to correctly, appropriately manage the authentication information. Furthermore, to use the authentication infrastructure such as SAML, it is necessary to have an agreement in advance between the provider and user of the function, thereby imposing a load on the user of the function.

There is also a mechanism of cooperating with an arbitrary Web service (or Web application) without using a dedicated API. As an example, there has been proposed a mechanism called Web Intents for implementing cooperation between the user and provider of a service by loosely coupling them by late run-time binding.

As a conventional technique, Japanese Patent-Laid Open No. 2011-123607 relates to the detail page of Device Stage, which is generated when a device driver is manually installed in an information processing apparatus such as a PC. For example, when one device provides a plurality of services, the detail page of Device Stage serving as a peripheral device management function may be provided for each device driver corresponding to each service. To avoid such a situation, when installing a driver, device detail pages are integrated into one page.

Japanese Patent Laid-Open No. 2011-123607 makes it possible to prepare a detail page for each service, and integrate the detail pages into one page, as needed, but does not consider any new cooperation mechanism such as Web Intents.

The present invention provides a method of flexibly and reliably implementing cooperation between a Web client and a Web service even if service contents provided by the Web service are particularized. Furthermore, the present invention provides a method of readily managing web services even if the number of managed web services increases along with particularization of services.

### SUMMARY OF THE INVENTION

The present invention in its first aspect provides an information processing terminal as specified in claims 1 to 14.

The present invention in its second aspect provides a control method as specified in claim 15.

The present invention in its third aspect provides a program as specified in claim 16.

According to the present invention, it is possible to improve the usability in a cooperation mechanism such as Web Intents.

Further features of the present invention will become apparent from the following description of embodiments (with reference to the attached drawings).

### BRIEF DESCRIPTION OF THE DRAWINGS

Figs. 1A and 1B are schematic views showing a system according to the present invention;
Fig. 2 is a block diagram showing an example of the hardware arrangement of an information processing terminal;
Figs. 3A and 3B are sequence charts for explaining the overview of the operation of Web Intents;
Fig. 4 is a view showing an example of an intent tag for function registration of Web Intents;
Fig. 5 is a view showing an example of an ECMAScript for activation of Web Intents;
Figs. 6A, 6B, and 6C are views each showing an example of a software arrangement;
Figs. 7A, 7B, 7C, and 7D are views each showing an example of a table structure according to the first embodiment;
Fig. 8 is a sequence chart showing service provision function registration processing according to the first embodiment;
Fig. 9 is a view showing an example of an intent tag according to the first embodiment;
Fig. 10 is a view showing an example of a provision function registration screen according to the first embodiment;
Figs. 11A and 11B are sequence charts showing service provision function execution processing according to the first embodiment;
Fig. 12 is a view showing an example of an ECMAScript according to the first embodiment;
Fig. 13 is a view showing an example of a provision function selection screen according to the first embodiment;
Fig. 14 is a view showing an example of an intent tag according to the second embodiment;
Figs. 15A and 15B are views each showing an example of a table structure according to the second embodiment;
Fig. 16 is a sequence chart showing service provision function registration processing according to the second embodiment;
Fig. 17 is a view showing an example of an intent tag according to the third embodiment;
Fig. 18 is a view showing an example of an ECMAScript according to the third embodiment;
Figs. 19A and 19B are views each showing an example of a table structure according to the third embodiment;
Fig. 20 is a sequence chart showing service provision function registration processing according to the third embodiment;
Fig. 21 is a sequence chart showing service provision function execution processing according to the third embodiment; and
Fig. 22 is a view showing an example of a provision function registration screen according to the fourth embodiment.

### DESCRIPTION OF THE EMBODIMENTS

Embodiments of the present invention will be described below with reference to the accompanying drawings.

### <First Embodiment>

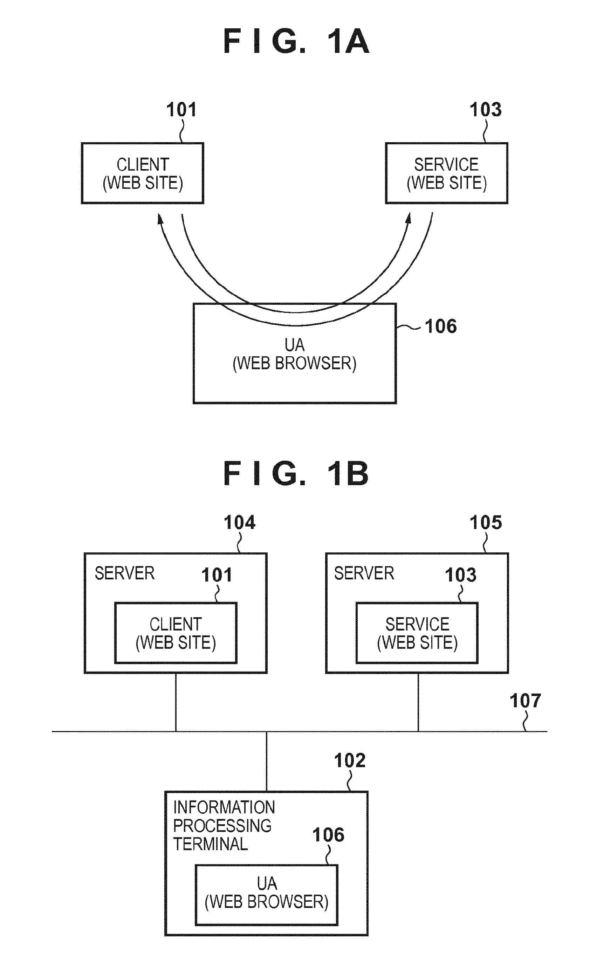

Fig. 1A is a view showing an overall arrangement for implementing Web Intents as an example of a mechanism of cooperating with an arbitrary Web service (or Web application) without using a dedicated API.

A Web Intents service (to be referred to as a service hereinafter) 103 provides a service or function using the Intents technique. A Web Intents client (to be referred to as a client hereinafter) 101 uses a service. A UA (User Agent) 106 functions to transfer a request from the client 101 to the service 103, and transfer a result from the service to the client. For this function, assume that the UA 106 has a relay function of exchanging data between the client 101 and the service 103. Furthermore, Web Intents as pieces of function information for calling the provision functions of the service 103 are registered in the UA 106.

In this mechanism, for example, the client 101 manages data, and is a Web site in which a button for calling the service 103 and the like are arranged. The UA 106 is a Web browser for displaying a Web site. The service 103 is the Web site of the cooperation destination of the client 101, which accepts, via the UA 106, the data managed by the client 101, and processes the data. If, for example, this mechanism is applied to a SNS (Social Networking Service), the service 103 serves as a submission destination service for accepting submission of photos and comments managed by the client 101 to form a browsing site. When user authentication or a user operation is necessary for the service 103 to provide a function, the user performs an operation on the UA 106.

Note that as long as a function of cooperating with a service (to be described later) is included, it is possible to implement the UA 106 by an operating system (OS) or an arbitrary application operating on an information processing terminal, instead of the browser. Examples of the information processing terminal are a personal computer, smartphone, tablet device, and car navigation device.

As for the service 103, a device such as a camera, image forming apparatus, or scanner incorporated in an information processing terminal can serve as a service provider, instead of the service provider on the Internet, such as the above-described submission destination service. Furthermore, as for the service 103, a peripheral device such as an image forming apparatus, scanner, or network camera connected via a network, or a Web service provided by a home appliance such as a refrigerator or television set can serve as a service provider.

An arbitrary combination of the client 101, UA 106, and service 103 may operate within the same system. More specifically, a document editing application having the same function as that of the web browser or the like may operate as an arrangement including the client 101 and UA 106.

### [Basic Sequence]

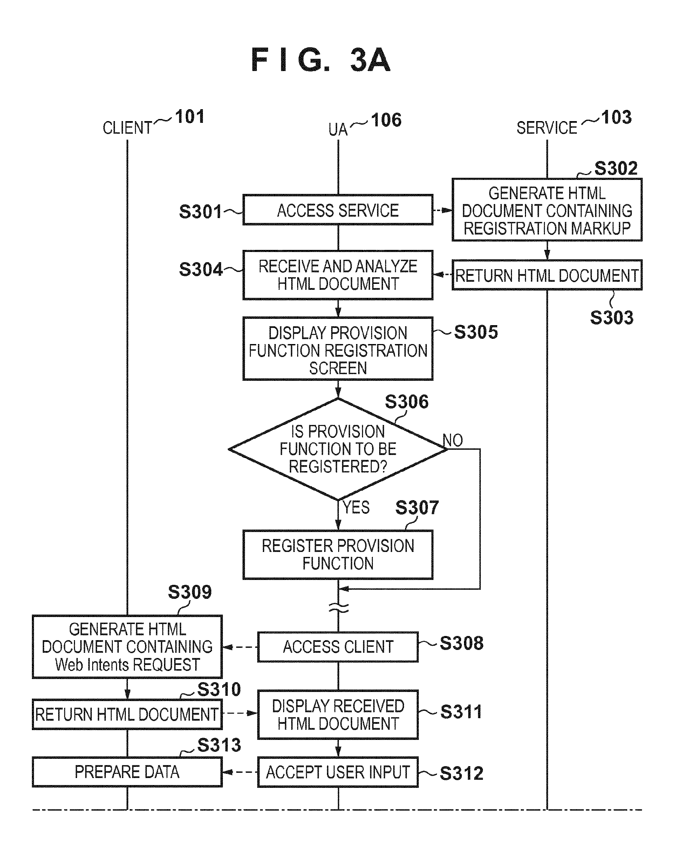

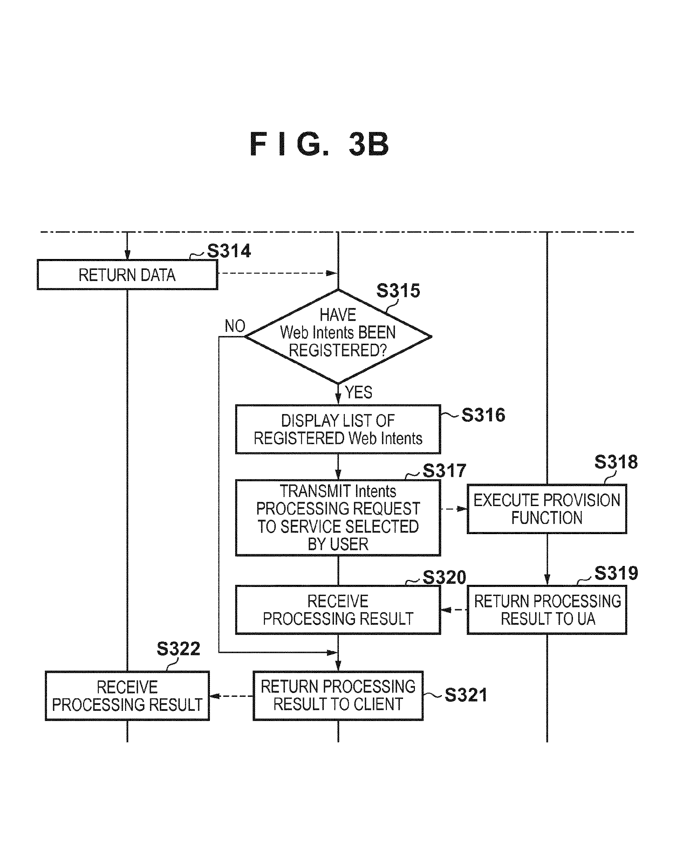

Figs. 3A and 3B are sequence charts for explaining a basic operation associated with providing a service using Web Intents. This sequence chart includes service provision function registration processing in steps S301 to S307 and service provision function execution processing in steps S308 to S322. Note that a broken arrow in the sequence chart described herein indicates the flow (transmission and reception) of data between the main bodies of processing.

The service provision function registration processing will be described. In step S301, the UA 106 accesses the service 103 based on a user operation. In step S302, the service 103 generates an HTML (Hyper Text Markup Language) response containing registration markup for registering a function provided by itself in the UA 106. In step S303, the service 103 returns the generated HTML response to the UA 106.

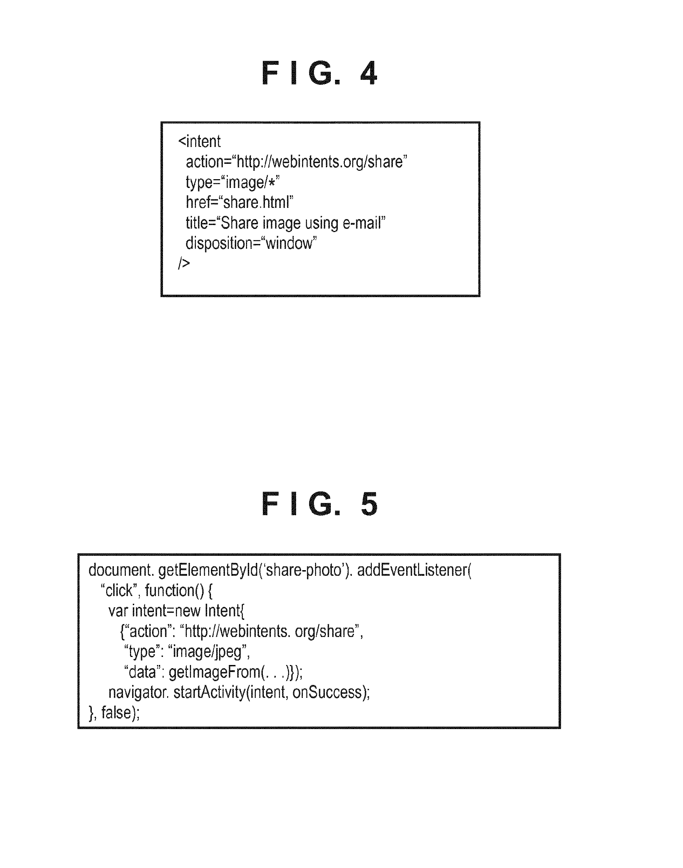

Contents of the HTML document returned from the service 103 to the UA 106 will be described with reference to an example shown in Fig. 4. In an intent tag, information for specifying a provision function is described. An action attribute indicates the category of the provision function, and a type attribute indicates the type of data or the like processable by the provision function. An href attribute indicates the connection destination (URL: Uniform Resource Locator) of the provision function, and a title attribute indicates the title of the provision function. Furthermore, a disposition attribute indicates how the called provision function is displayed. The respective attributes and their values in the intent tag are commonly defined by, for example, the Web Intents specifications. For example, for the action attribute, values such as "edit", "share", "pick", "view", "subscribe", and "save" are defined.

In the example shown in Fig. 4, the category of the provision function is "share (sharing)", the type of processable data or the like is "image/* (image data of any format (*))", and the connection destination is "share.html". Furthermore, the title is "Share image using e-mail", and it is indicated that this function is displayed in another window via the UA 106.

Upon receiving the HTML response from the service 103 in step S304, in step S305 the UA 106 confirms with the user whether to register the provision function of the service 103 in the UA 106. If, for example, the UA 106 is a Web browser, a popup window is displayed to prompt the user to make a selection. If the user selects to register the provision function as a Web Intent (YES in step S306), in step S307 the UA 106 stores the information received in step S304 in an internal storage unit or the like. More specifically, the information about the provision function is stored in the storage area of the information processing terminal on which the UA 106 operates, and registered as a Web Intent in the UA 106.

The service provision function execution processing will be described next. In step S308, the UA 106 accesses the client 101 in response to a user operation. In step S309, the client 101 generates an HTML document in which information indicating that the provision function (Web Intent) of the service 103 is to be used is described. In step S310, the client 101 returns the generated HTML document to the UA 106. If, for example, an image and a "sharing" button are displayed on the Web site as the client 101, the Web site returns an HTML document containing an ECMAScript shown in Fig. 5 to the UA 106.

Contents of the HTML response returned from the client 101 to the UA 106 will be explained with reference to an example shown in Fig. 5. The ECMAScript shown in Fig. 5 is contained in the returned HTML document, and indicates that a designated anonymous function (function()) is executed when a button (not shown) corresponding to an ID "share-photo" in the HTML document is clicked. The anonymous function shown in Fig. 5 generates a new Intent object, and calls a function startActivity() by setting the generated Intent object as an argument. Upon executing the function, the UA 106 extracts those Web Intents registered in itself, whose action and type attributes match those of the designated Intent object, and displays a list of the extracted Web Intents, thereby requesting the user to make a selection. By executing a function getImageFrom() called in the anonymous function, image data held by the client 101 are acquired.

In step S311, the UA 106 receives the HTML document from the client 101, and displays it. In step S312, upon detecting that the user presses the "sharing" button on the display screen, the UA 106 executes the ECMAScript for activation of Web Intents, and issues an image data acquisition request to the client 101.

Upon receiving the image data acquisition request issued in step S312, the client 101 prepares image data in step S313. In step S314, the client 101 returns the prepared image data to the UA 106.

The UA 106 receives the image data held by the client 101. Upon pressing of the "sharing" button in step S312, the UA 106 displays the list of the Web Intents registered in itself (YES in step S315, and step S316). Note that if no provision function is registered in the list of the Web Intents (NO in step S315), the process advances to step S321, and the UA 106 returns, to the client 101, information indicating that the processing has failed.

Upon detecting user selection of a Web Intent indicating the provision function of the service 103 from the list of the Web Intents, in step S317 the UA 106 transmits an HTTP request to the selected service 103. At this time, the UA 106 includes contents of the Intent object generated by the ECMAScript of Fig. 5 in transmission data.

In step S318, the service 103 extracts the Intent object from the HTTP request, and implements the use of the selected provision function (in this example, "sharing" of the image data of the client 101) while interacting with the user via the UA 106.

Upon completion of the processing in step S318, in step S319 the service 103 returns a response containing an ECMAScript for notifying the client 101 of a processing result. In step S320, the UA 106 executes the ECMAScript contained in the response from the service 103, and calls a callback function onSuccess() designated by an argument of the function startActivity() in step S311. In step S321, the UA 106 returns the processing result to the client 101 using the callback function onSuccess(). Finally, in step S322, the client 101 receives the processing result from the UA 106.

A case in which a Web mail function is used will be described with reference to the sequence shown in Figs. 3A and 3B. The user accesses a site where a button for calling Web Intents in a Web storage (the client 101) for managing photo data is prepared by using a Web browser (UA). When the user presses the button, the Web browser (UA) displays a popup window including a list of registered services. If the user selects the Web mail function, a site for providing the function is displayed on another window, and a new mail attached with photo data is generated as a processing result on the window.

The above processing enables the client 101 to call, via the UA 106, the function (in this example, "sharing" of images) of Web Intents provided by the service 103.

Fig. 1B is a view showing an example of the configuration of a network system to which the Web Intents mechanism implementing the present invention is applied. Referring to Fig. 1B, a Web browser functioning as a Web Intents user agent (UA) operates on an information processing terminal 102. Furthermore, a Web Intents client operates on a server 104, and a Web Intents service operates on a server 105. The information processing terminal 102 and servers 104 and 105 are mutually communicable via a network 107. A LAN, the Internet, or a combination thereof is assumed as the network 107. A connection form may be wired or wireless connection.

### [Hardware Arrangement]

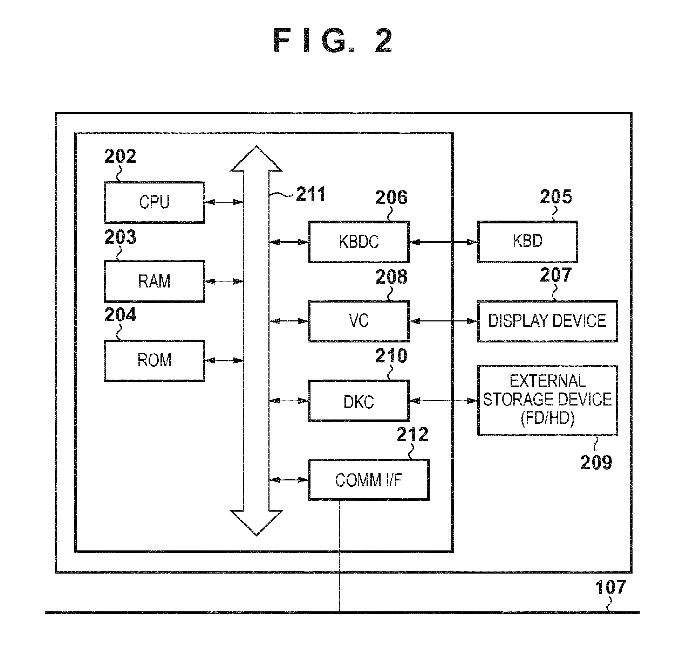

Fig. 2 is a block diagram showing an example of the hardware arrangement of the information processing terminal on which a program (Web browser, an OS, or the like) functioning as the UA 106 is executed. Also, the servers on which programs (Web sites or the like) functioning as the client 101 and service 103 operate can adopt the same hardware arrangement.

Referring to Fig. 2, the information processing terminal includes a CPU 202, a RAM 203, a ROM 204, and an external storage device 209. The CPU 202 executes programs stored in the ROM 204 and external storage device 209, or programs downloaded from the network 107 such as a LAN, thereby comprehensively controlling respective devices connected to a system bus 211. The RAM 203 functions as a main memory, a work memory, or the like for the CPU 202. The external storage device 209 includes a hard disk (HD) and floppy® disk (FD). The external storage device 209 stores various applications including a boot program, OS, authentication server, and authentication client, database data, user files, and the like.

In the information processing terminal, a keyboard controller (KBDC) 206 sends input information from a keyboard (KBD) 205 or a pointing device (not shown) to the CPU 202. A video controller (VC) 208 controls display of a display device 207 formed by a CRT, an LCD, or the like. A disk controller (DKC) 210 controls access to the external storage device 209. A communication controller (COMM I/F) 212 and respective processing units exist as files saved in the external storage device 209 of the server 104. Each of these files is a program module that is loaded into the RAM 203 and executed by another processing unit which uses the OS or the processing unit at the time of execution.

### [Software Arrangement]

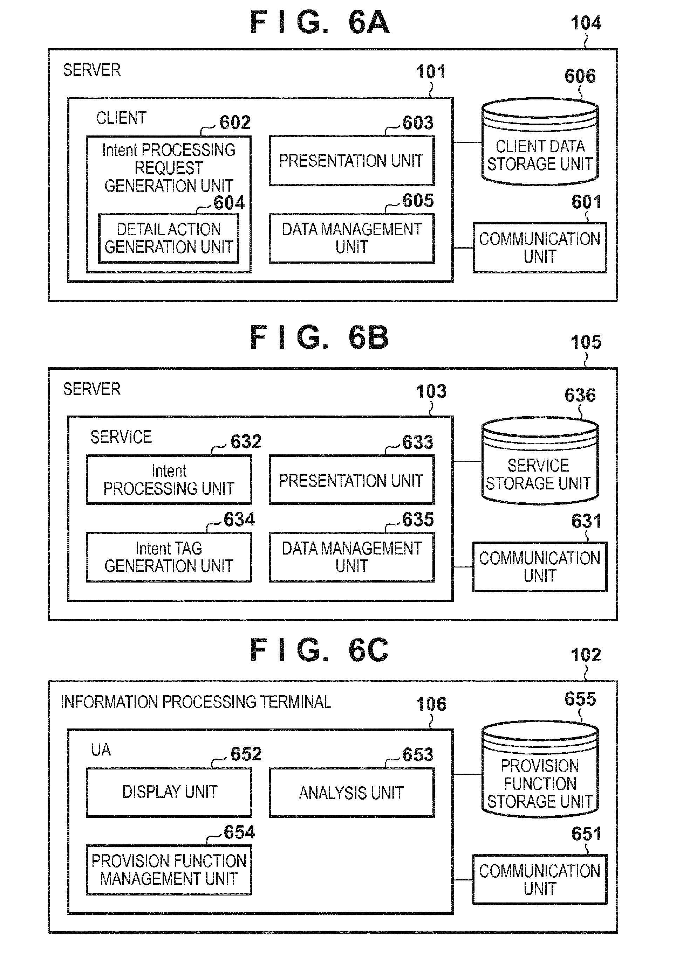

The client 101 is an application for providing a storage service such as storage of, for example, image data and document data. The client 101 is implemented as a program for executing processing in response to an HTTP request. An example of the arrangement of the software modules of the client 101 will be described with reference to Fig. 6A. The client 101 includes an Intent processing request generation unit 602, a presentation unit 603, a detail action generation unit 604, and a data management unit 605.

The Intent processing request generation unit 602 generates an ECMAScript as an Intent processing request. In response to, for example, a page acquisition request received via a communication unit 601, the presentation unit 603 generates an HTML document. The detail action generation unit 604 designates an action in detail when the client 101 generates a processing request to a Web Intents service.

In response to a request from the presentation unit 603, the data management unit 605 acquires and stores data such as an image from and in a client data storage unit 606. The client data storage unit 606 manages data, and stores and reads out data in response to a request from another processing unit. The communication unit 601 receives an HTTP request message from an external device, and notifies the presentation unit 603 of contents of the request. The communication unit 601 receives a request from the presentation unit 603, and transmits an HTTP response message to an external device. Note that the client data storage unit 606 may exist on a device different from the server 104.

Fig. 6B is a view showing an example of the arrangement of the software modules of the server 105. In the server 105, the service 103 and respective processing units exist as files saved in the external storage device 209 of the server 105. Each of these files is a program module loaded into the RAM 203 and executed by another processing unit which uses the OS or the processing unit at the time of execution.

The service 103 provides a saving function and editing function of image data and document data. Furthermore, the server 105 has a function of a Web Intents service for providing a service using the Intents technique. The service 103 is implemented as a program for executing processing in response to an HTTP request. The service 103 includes an Intent processing unit 632, a presentation unit 633, an intent tag generation unit 634, and a data management unit 635.

The Intent processing unit 632 analyzes and processes an Intent object. In response to a page acquisition request or the like received via a communication unit 631, the presentation unit 633 generates an HTML document. The intent tag generation unit 634 generates an intent tag for notifying the UA of information of a provision function stored in a service data storage unit 636. In response to a request from another processing unit, the data management unit 635 acquires and stores data such as an image from and in the service data storage unit 636. The service data storage unit 636 manages data, and reads out and stores data in response to a request from the intent tag generation unit 634 or data management unit 635. The communication unit 631 receives an HTTP request message from an external device, and notifies the presentation unit 633 of contents of the request. The communication unit 631 receives a request from the presentation unit 633, and transmits an HTTP response message to an external device. Note that the service data storage unit 636 may exist on a device different from the server 105.

Fig. 6C is a view showing an example of the arrangement of the software modules of the information processing terminal 102. In the information processing terminal 102, the UA 106 represented by the Web browser and respective processing units exist as files saved in the external storage device 209 of the information processing terminal 102. Each of these files is a program module loaded into the RAM 203 and executed by another processing unit which uses the OS or the processing unit at the time of execution.

The UA 106 includes a display unit 652, an analysis unit 653, and a provision function management unit 654. The display unit 652 renders an HTML document. Furthermore, in response to a request from another processing unit, the display unit 652 displays a screen for accepting selection of a provision function. The analysis unit 653 analyzes an HTML document. The analysis unit 653 also analyzes an ECMAScript as an Intent processing request. The provision function management unit 654 acquires and stores information for specifying a registered provision function from and in a provision function storage unit 655 (to be described later).

The provision function storage unit 655 manages a list of Web Intents services including the provision functions of the service 103, and stores and reads out data in response to a request from the provision function management unit 654. A communication unit 651 receives a request from another processing unit, and transmits an HTTP request message to an external device. Furthermore, the communication unit 651 receives an HTTP response message from an external device, and notifies the analysis unit 653 of contents of the response. Note that the provision function storage unit 655 may exist on a device different from the information processing terminal 102.

### [Management Table]

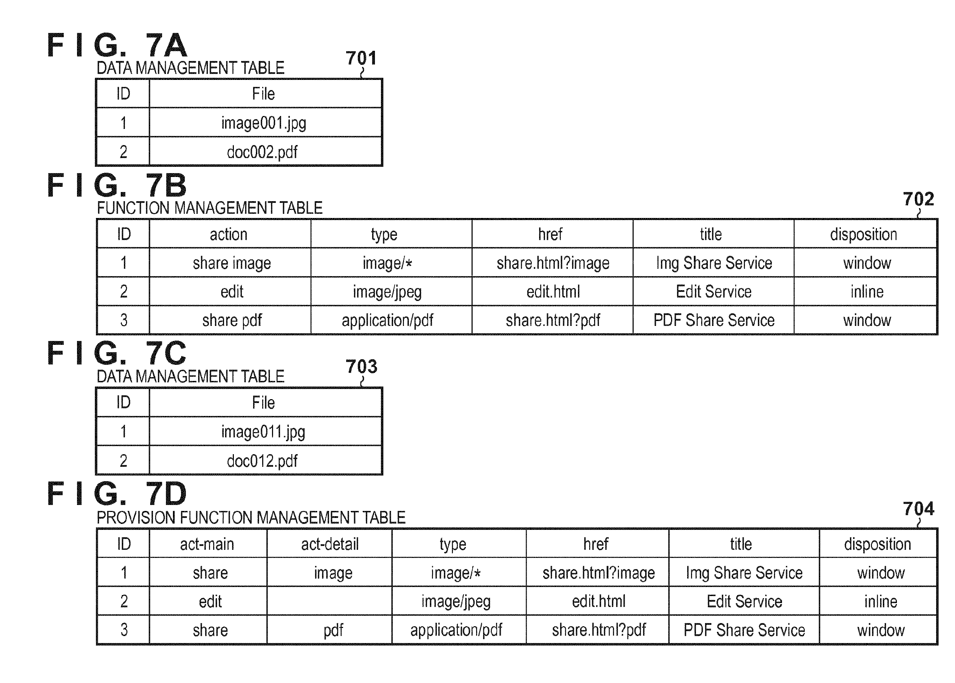

Fig. 7A shows an example of the structure of a table managed by the client data storage unit 606 of the server 104. Note that the table structure shown in Fig. 7A is an example, and a table structure different from that shown in Fig. 7A may be used.

A data management table 701 is a table for managing various data processed by the client 101. Pieces of information managed by the data management table 701 are "ID" and "File". The information "ID" indicates an identifier for uniquely identifying each of the various data in the client 101, and the information "File" represents the file name of each of the various data. That is, in the example of the data management table 701, two data files "image001.jpg" and "doc002.pdf" are managed.

Fig. 7B shows an example of the structure of a table managed by the service data storage unit 636 of the server 105. Note that the table structure shown in Fig. 7B is an example, and a table structure different from that in this example may be used.

The service data storage unit 636 manages a function management table 702 and a data management table 703. The function management table 702 is a table for managing information about the provision functions of the service 103. Assume that information is registered in advance in the function management table 702. For example, when the service 103 is installed in the server 105, it may register information of the provision functions in the function management table 702. Furthermore, when the version of the service 103 is upgraded, the function management table 702 may be updated.

Pieces of information managed by the function management table 702 are "ID", "action", "type", "href", "title", and "disposition". These pieces of information are almost the same as those indicated by the intent tag described with reference to Fig. 4. The information "ID" indicates an identifier for uniquely identifying a provision function in the service 103. The information "action" indicates the category of the provision function, and the information "type" indicates the type of data or the like processable by the provision function. The information "href" indicates the connection destination (URL) of the provision function, and the information "title" indicates the title of the provision function. The information "disposition" indicates how the called provision function is displayed.

The data management table 703 is a table for managing various data processed by the service 103. Pieces of information managed by the data management table 703 are "ID" and "File". The information "ID" indicates an identifier for uniquely identifying each of the various data in the service 103. The information "File" represents the file name of each of the various data. That is, in the example of the data management table 703, two data files "image011.jpg" and "doc012.pdf" are managed.

Fig. 7C shows an example of the structure of a table managed by the provision function storage unit 655 of the information processing terminal 102. Note that the table structure shown in Fig. 7C is an example, and a table structure different from that shown in Fig. 7C may be used.

A provision function management table 704 is a table for managing information about the provision functions of a Web Intents service which can be provided via the UA 106.

Pieces of information managed by the provision function management table 704 are "ID", "act-main", "act-detail", "type", "href", "title", and "disposition". The pieces of information are almost the same as those indicated by intent tag described with reference to Fig. 4, except for "act-main" and "act-detail". The information "ID" indicates an identifier for uniquely identifying a provision function in the service 103. The pieces of information "act-main" and "act-detail" are obtained by dividing the action attribute of the intent tag described with reference to Fig. 4 into a main part and a detail part. The information "act-main" indicates the category of the provision function, and the information "act-detail" indicates details of the category. The information "type" indicates the type of data or the like processable by the provision function. The information "href" indicates the connection destination (URL) of the provision function, and the information "title" indicates the title of the provision function. The information "disposition" indicates how the called provision function is displayed.

Note that in this embodiment, the action attribute is formed by the main part and the detail part. The main part of the action attribute is information defined by the Web Intents specifications, and has a value such as "edit", "share", "pick", "view", "subscribe", or "save". In this embodiment, the information of the action attribute will also be referred to as the "first classification information". On the other hand, information such as "image" or "pdf" is defined in the detail part of the action attribute, which is unique to this embodiment, and will be referred to as the "second classification information".

### [Processing Sequence]

### (Registration Processing)

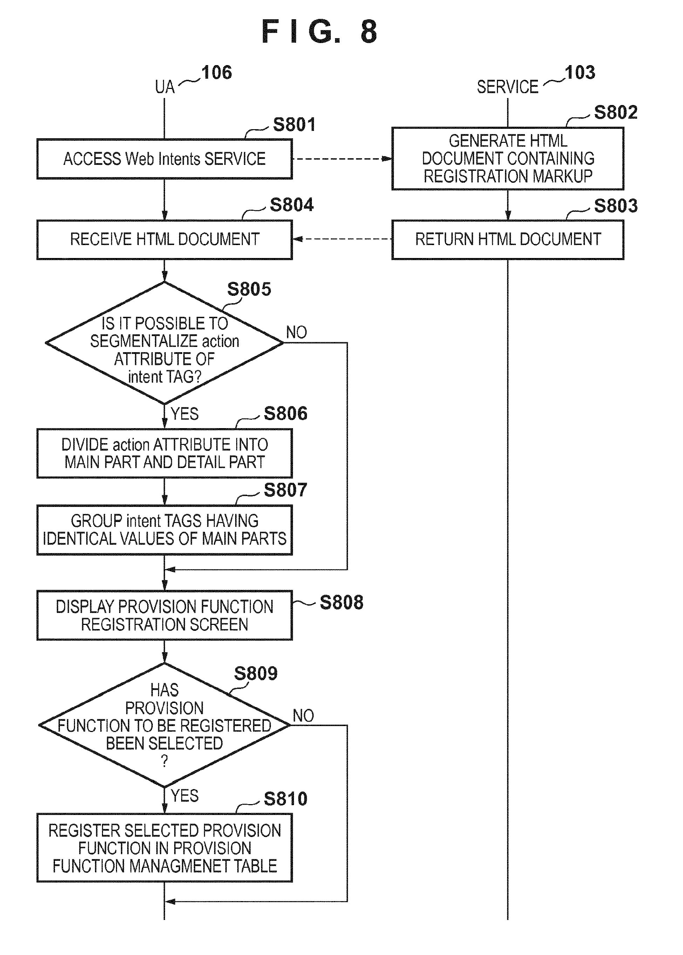

An operation (corresponding to the service provision function registration processing shown in Figs. 3A and 3B) in which the information processing terminal 102 accesses the service 103 of the server 105, and registers the provision functions of the service 103 in the UA 106 will be described with reference to a sequence chart shown in Fig. 8. Processes in steps S801 to S804 are almost the same as those in steps S301 to S304 of Fig. 3A.

In step S801, the UA 106 accesses the service 103. In step S802, the intent tag generation unit 634 of the service 103 generates an intent tag from the function management table 702, and the presentation unit 633 generates an HTML response. In this case, intent tags representing three services registered in the function management table 702 are generated.

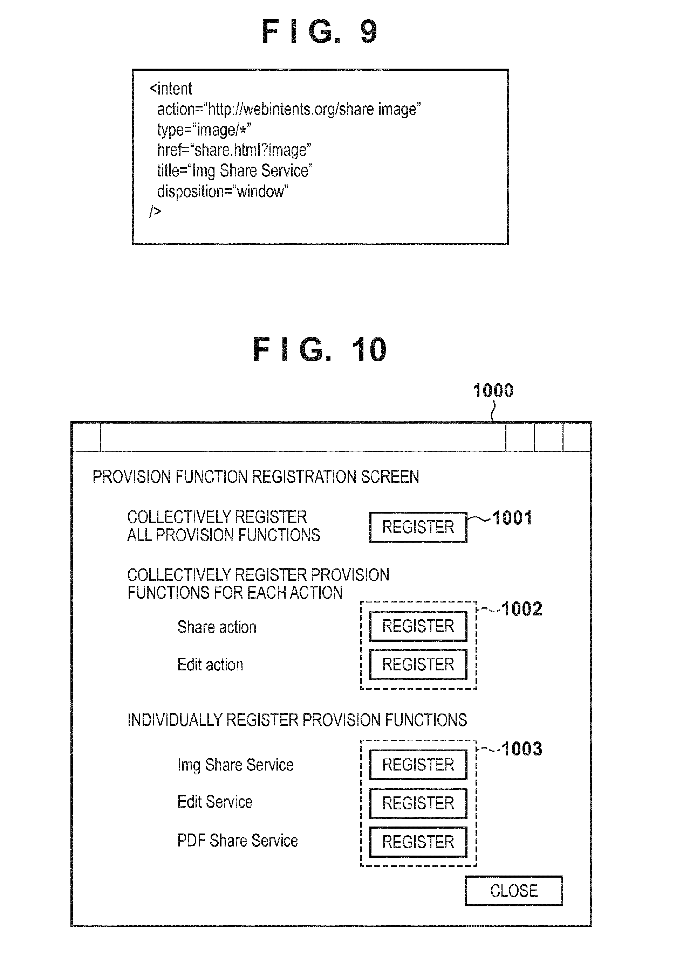

Fig. 9 shows an example of the intent tag generated by the intent tag generation unit 634 in step S802. Information of a record whose "ID" is "1" in the function management table 702 is exemplified. The difference from the intent tag shown in Fig. 4 is that "share image" obtained by particularizing "share" is designated in the action attribute. That is, information formed by a main part and a detail part is described in the action attribute.

In step S803, the communication unit 631 of the server 105 returns the generated HTML response to the UA 106.

In step S804, the communication unit 651 of the information processing terminal 102 receives the HTML response transmitted by the server 105. In step S805, the analysis unit 653 determines whether it is possible to segmentalize the action attribute of the intent tag detected from the received HTML response. Whether it is possible to segmentalize the action attribute can be determined depending on whether a character string designated in the action attribute includes a separator. In this embodiment, assume that a predetermined character (or character string) serving as a separator of the action attribute is a space (" "). In the example shown in Fig. 9, since there is a space between "share" and "image" of the character string, the analysis unit 653 determines that it is possible to segmentalize the action attribute. If it is possible to segmentalize the action attribute (YES in step S805), the process advances to step S806; otherwise (NO in step S805), the process advances to step S808.

In step S806, the analysis unit 653 divides the action attribute into the main part and the detail part with respect to the separator. In the example shown in Fig. 9, "share" serves as the main part and "image" serves as the detail part.

If the HTML response received by the UA 106 in step S804 contains a plurality of intent tags, in step S807 the UA 106 groups intent tags having the identical main parts of the action attributes. In this embodiment, since the intent tag of a record whose "ID" is "1" in the function management table 702 includes the same main part ("share") of the action attribute as that of the intent tag of a record whose "ID" is "3", these records are grouped.

In step S808, the display unit 652 displays a provision function registration screen on the UA 106. Fig. 10 shows an example of a provision function registration screen 1000 displayed in step S808. Referring to Fig. 10, a button 1001 is used to register, in the UA 106, all the provision functions of the service 103 represented by the intent tags contained in the HTML response received in step S804. Buttons 1002 are used to register, in the UA 106, the provision functions for each set of intent tags grouped in step S807. Buttons 1003 are used to individually register the provision functions in the UA 106.

In step S809, the display unit 652 detects whether a provision function has been selected. A provision function is selected when the user presses one of the buttons 1001 to 1003 on the provision function registration screen 1000. If a provision function has been selected (YES in step S809), the process advances to step S810; otherwise (NO in step S809), the sequence is terminated.

In step S810, the provision function management unit 654 registers the information of the selected provision function in the provision function management table 704. The main part of the action attribute which has been divided in step S806 is registered in an act-main field, and the detail part of the action attribute is registered in an act-detail field. The sequence is then terminated.

### (Execution Processing)

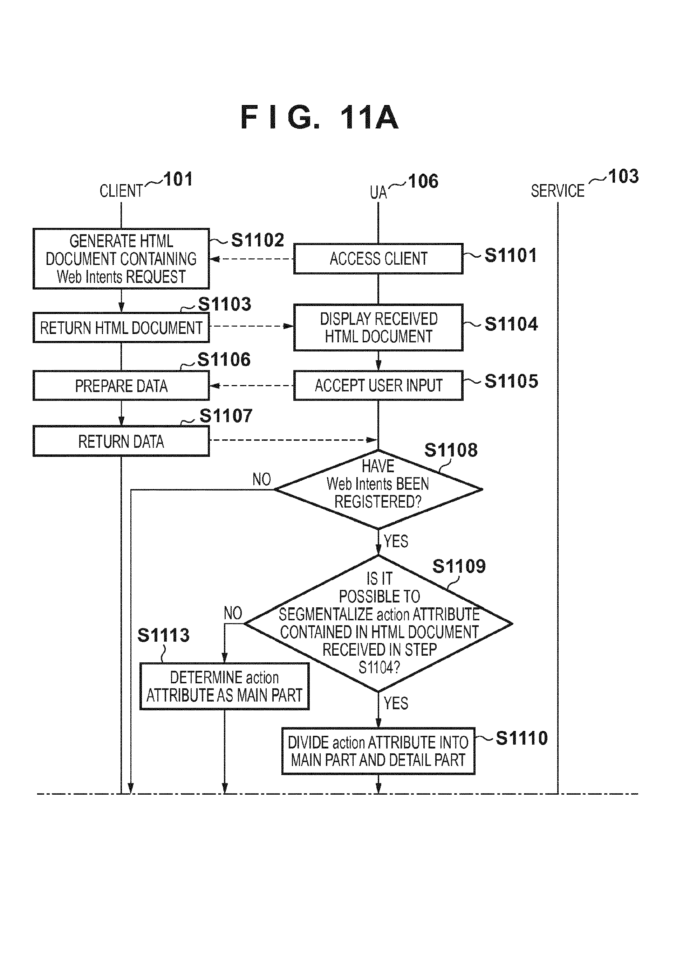

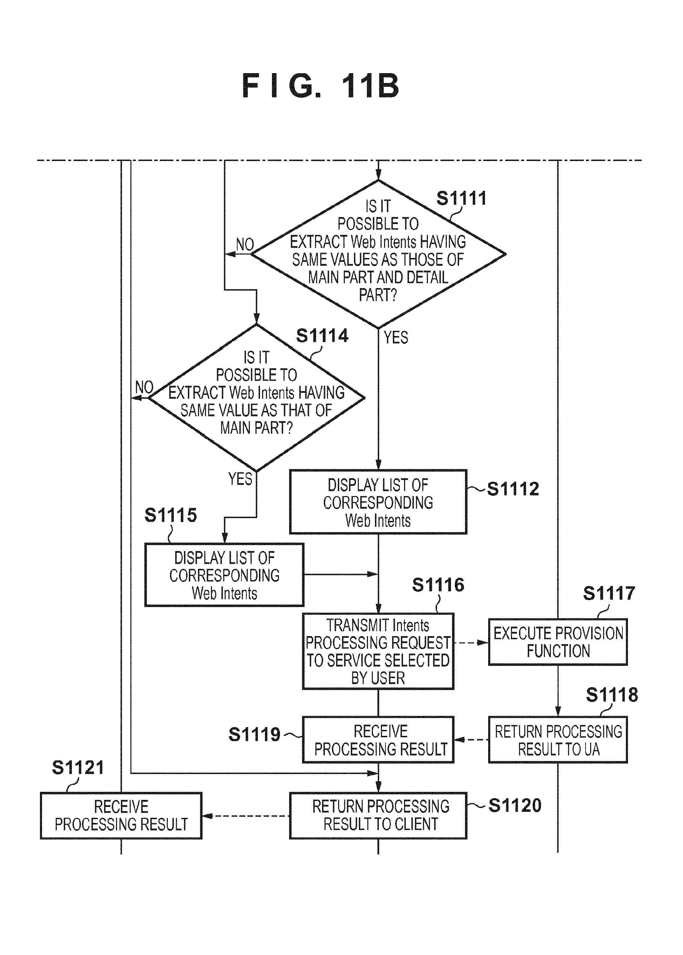

An operation (corresponding to the service provision function execution processing shown in Figs. 3A and 3B) in which the information processing terminal 102 accesses the client 101 of the server 104, and mediates an Intent processing request to the service 103 of the server 105 will be described with reference to sequence chart shown in Figs. 11A and 11B. Processes in steps S1101 to S1107 are the same as those in steps S308 to S314 of Figs. 3A and 3B and a description thereof will be omitted.

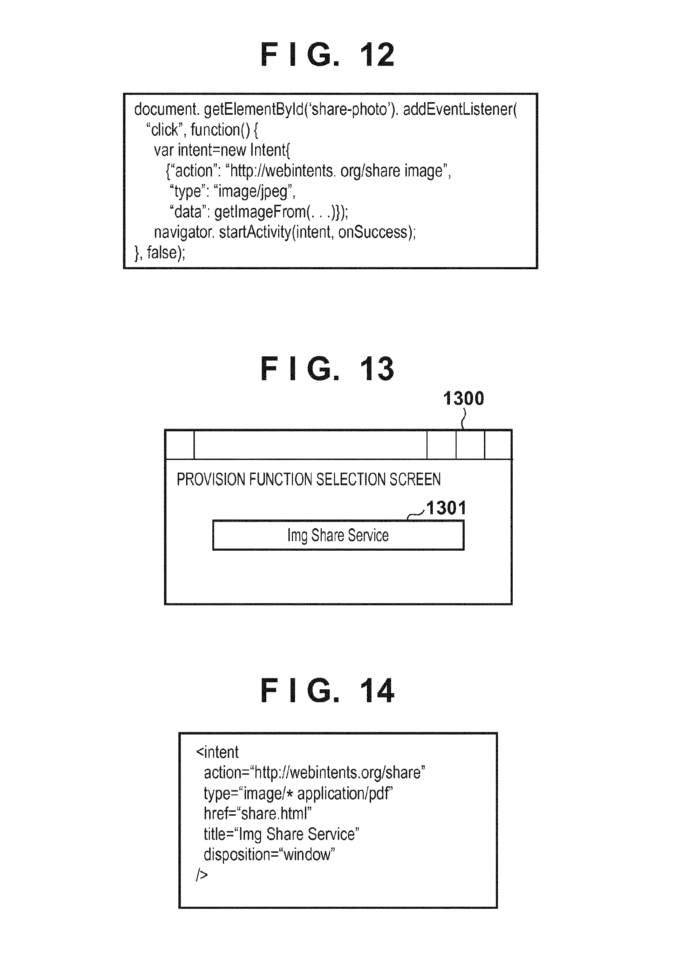

In step S1102, the client 101 generates an HTML response containing the action attribute which can be segmentalized, as exemplified in Fig. 12. Fig. 12 shows an example of contents of the HTML response generated in step S1102 according to this embodiment. The difference from the example shown in Fig. 5 is that the action attribute designated when generating a new Intent object can be segmentalized.

Similarly to step S315 of Fig. 3B, in step S1108, the provision function management unit 654 determines whether a list of Web Intents has been registered in the provision function storage unit 655. More specifically, the provision function management unit 654 determines whether one or more entries exist in the provision function management table 704. If the list has been registered (YES in step S1108), the process advances to step S1109; otherwise (NO in step S1108), the process advances to step S1120.

In step S1109, the analysis unit 653 determines whether it is possible to segmentalize the value of the action attribute of an ECMAScript contained in an HTML document received in step S1104. The determination of whether it is possible to segmentalize the value is the same as that in step S805 of Fig. 8 and a description thereof will be omitted. If the analysis unit 653 determines that it is possible to segmentalize the value (YES in step S1109), the process advances to step S1110; otherwise (NO in step S1109), the process advances to step S1113.

In step S1110, the analysis unit 653 divides the action attribute of the ECMAScript into a main part and a detail part with respect to a separator. In the example shown in Fig. 12, "share" serves as the main part and "image" serves as the detail part.

In step S1111, the provision function management unit 654 determines whether it is possible to extract, from the entries in the provision function management table 704, an entry having the same values as those of the main part and the detail part which have been segmentalized in step S1110. If it is possible to extract such an entry (YES in step S1111), the process advances to step S1112; otherwise (NO in step S1111), the process advances to step S1114.

In step S1112, the display unit 652 displays, in a list format, the entry extracted in step S1111 on the UA 106. Fig. 13 shows an example of a provision function selection screen 1300 displayed in step S1112. Referring to Fig. 13, a button 1301 is used to select a provision function for which the title of the entry extracted in step S1111 is displayed. Note that if a plurality of entries are extracted in step S1111, a plurality of buttons are displayed on the provision function selection screen 1300.

In step S1113, the analysis unit 653 determines the value of the action attribute of the ECMAScript as a main part.

In step S1114, the provision function management unit 654 determines whether it is possible to extract, from the entries in the provision function management table 704, an entry having the same value as that determined as the main part in step S1110 or S1113. If it is possible to extract such an entry (YES in step S1114), the process advances to step S1115; otherwise (NO in step S1114), the process advances to step S1120.

In step S1115, the display unit 652 displays, in a list format, the entry extracted in step S1114 on the UA 106. An example of a screen displayed in step S1115 is the same as that shown in Fig. 13 and a description thereof will be omitted. Processes in steps S1116 to S1121 are the same as those in steps S317 to S322 of Fig. 3B and a description thereof will be omitted.

Note that a case in which the UA 106 analyzes the action attributes of the received intent tags, and groups the provision functions has been explained with reference to Fig. 8. However, the provision functions may be grouped by introducing a new attribute irrelevant to the action attribute. In this case, a field corresponding to the new attribute is added to each of the function management table 702 and provision function management table 704. In a step corresponding to step S805, it is determined whether the new attribute is included in the intent tag. In steps corresponding to steps S806 and S807, intent tags whose new attributes coincide with each other are grouped. Note that examples of the new attribute are a vendor attribute representing a vendor for providing a service, and a keyword attribute for freely setting a keyword. However, the new attribute is not limited to them. The new attribute is unique to the present invention, and can thus be regarded as the second classification information. The same grouping method is also used in embodiments to be described below.

Furthermore, in this embodiment, a case in which the provision function registration screen is displayed immediately after the UA 106 accesses the service 103 has been explained. However, the provision function registration screen may be displayed, for example, at the start or end of the UA 106. Alternatively, the user may issue an instruction through the menu of the UA 106 at an arbitrary timing. In this case, after the UA 106 accesses the service 103, it temporarily holds information to be displayed on the provision function registration screen in the RAM 203 or external storage device 209. The UA 106 uses, as a trigger, the launching or quitting of the UA 106 or a user instruction to read out the information temporarily held in the RAM 203 or external storage device 209, thereby displaying the information on the provision function registration screen.

### <Second Embodiment>

In the first embodiment, a case in which the action attribute is divided into the main part and the detail part has been explained. In this embodiment, a case in which the type attribute is extended will be described. That is, in this embodiment, the information of the action attribute defined by the Web Intents specifications serves as the "first classification information". On the other hand, the information of the type attribute having a structure unique to this embodiment serves as the "second classification information".

Fig. 14 shows an example of an intent tag generated by an intent tag generation unit 634 of a service 103 according to this embodiment. The difference from the intent tag shown in Fig. 4 is that a plurality of types of data are designated in the type attribute.

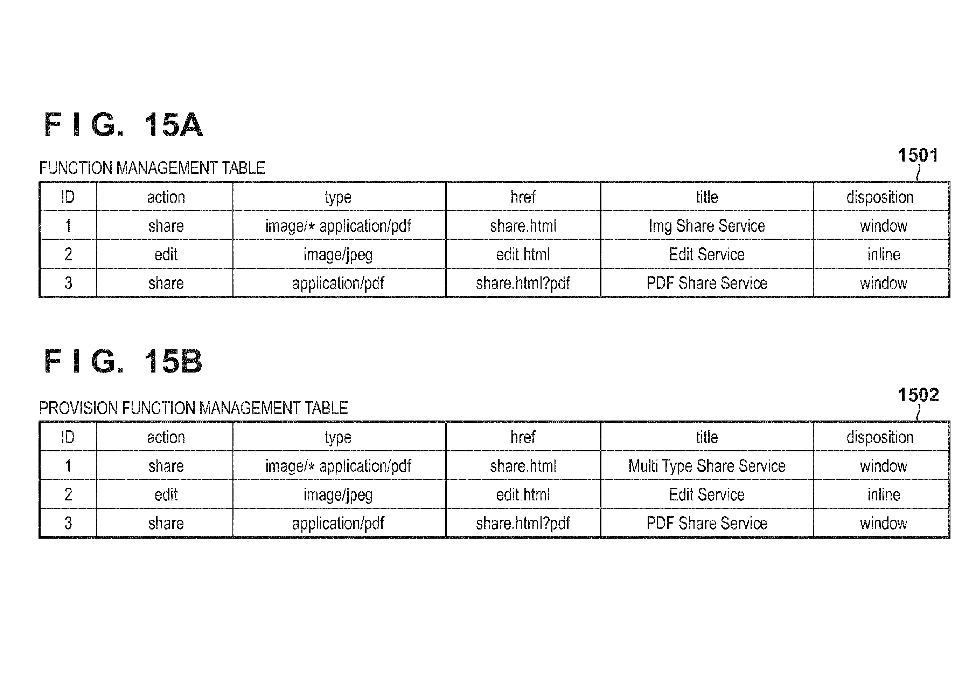

A function management table 1501 shown in Fig. 15A shows an example of the structure of a table managed by a service data storage unit 636 of a server 105 according to this embodiment, and is similar to the function management table 702 shown in Fig. 7B. The table structure shown in Fig. 15A is an example, and a table structure different from that in this example may be used. Although it is possible to designate, in the action field of the function management table 702, the value of the action attribute which can be particularized, it is possible to designate a plurality of values as the type attribute in the type field of the function management table 1501.

A provision function management table 1502 shown in Fig. 15B shows an example of the structure of a table managed by a provision function storage unit 655 of an information processing terminal 102 according to this embodiment, and is similar to the provision function management table 704 shown in Fig. 7C. Note that the table structure shown in Fig. 15B is an example, and a table structure different from that in this example may be used. In the provision function management table 704 described in the first embodiment, the act-main field and the act-detail field are provided to store the information of the particularized action attribute. On the other hand, the provision function management table 1502 according to this embodiment is configured to store information of a plurality of data types in the type field so as to cope with a case in which a plurality of data types are designated in the type attribute of an intent tag.

### [Processing Sequence]

### (Registration Processing)

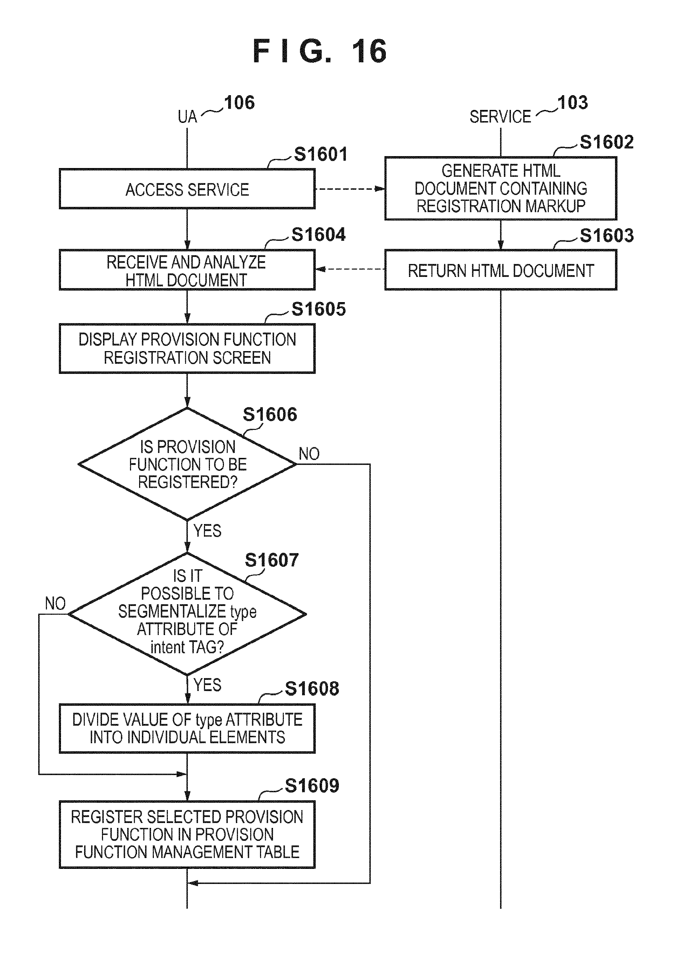

An operation (corresponding to the service provision function registration processing shown in Figs. 3A and 3B) in which the information processing terminal 102 accesses the service 103 of the server 105, and registers the provision functions of the service 103 in a UA 106 will be described with reference to a sequence chart shown in Fig. 16. Processes in step S1601 to S1606 are the same as those in steps S301 to S306 of Fig. 3A and a description thereof will be omitted.

In step S1607, an analysis unit 653 determines whether it is possible to segmentalize the type attribute of an intent tag corresponding to a provision function selected by the user in step S1606. Whether it is possible to segmentalize the type attribute can be determined depending on whether a character string designated in the type attribute includes a separator. In this embodiment, assume that a predetermined character (or character string) serving as a separator of the type attribute is a space (" "). In the example shown in Fig. 14, since there is a space between "image/*" and "application/pdf", it is determined that it is possible to segmentalize the type attribute.

In step S1608, the analysis unit 653 divides the type attribute into individual elements with respect to the separator.

In step S1609, a provision function management unit 654 registers the information of the selected provision function in the provision function management table 1502. The individual elements of the type attribute divided in step S1608 are registered in the type field. The service provision function registration processing according to this embodiment then ends.

Service provision function execution processing according to this embodiment is the same as that shown in Figs. 3A and 3B described in the first embodiment except for a step corresponding to step S315, and a description thereof will be omitted.

In this embodiment, in the step corresponding to step S315, the provision function management unit 654 determines whether it is possible to extract, from the provision function management table 1502, an entry having values which respectively match a value in the action field and one of the elements registered in the type field.

With the above processing, in the second embodiment, it is possible to obtain the same effects as those in the first embodiment.

### <Third Embodiment>

In this embodiment, a case will be described in which a new attribute "sub-action" is added, in addition to the action attribute. That is, in this embodiment, information of the action attribute defined by the Web Intents specifications serves as the "first classification information". On the other hand, information of the characteristic sub-action attribute newly provided in this embodiment serves as the "second classification information".

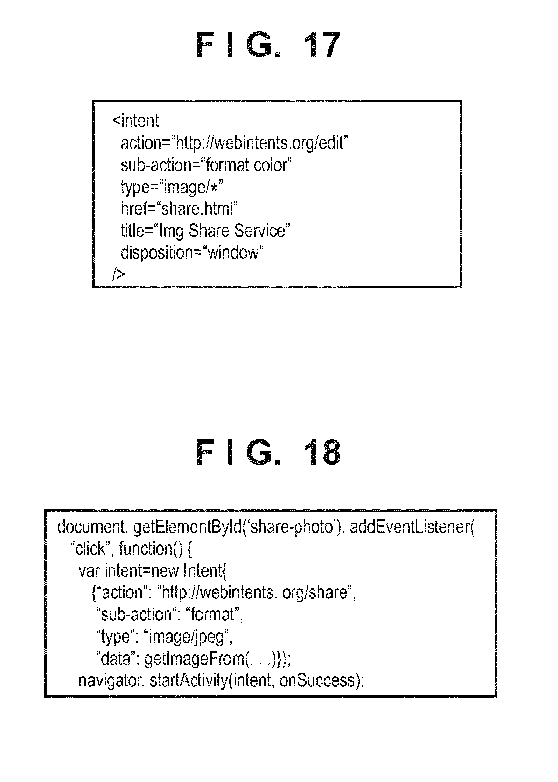

Fig. 17 shows an example of an intent tag generated by an intent tag generation unit 634 of a service 103 according to this embodiment. The difference from the intent tag shown in Fig. 4 is that the sub-action attribute for complementing the action attribute is newly added. Note that a plurality of values may be designated in the sub-action attribute by separating those using a separator. In the example shown in Fig. 17, "edit" (meaning "editing") is designated in the action attribute. However, the present invention is not limited to this. Although "format" (meaning "format conversion") and "color" (meaning "color conversion") are designated as values of the sub-action attribute, the present invention is not limited to this. That is, setting values may be defined according to processing and the attributes of data to be processed.

Fig. 18 shows an example of an ECMAScript contained in an HTML response returned from a client 101 to a UA 106 according to this embodiment. The difference from the ECMAScript shown in Fig. 5 is that the sub-action attribute for complementing the action attribute is added. Note that a plurality of values may be designated in the sub-action attribute by separating those using a separator.

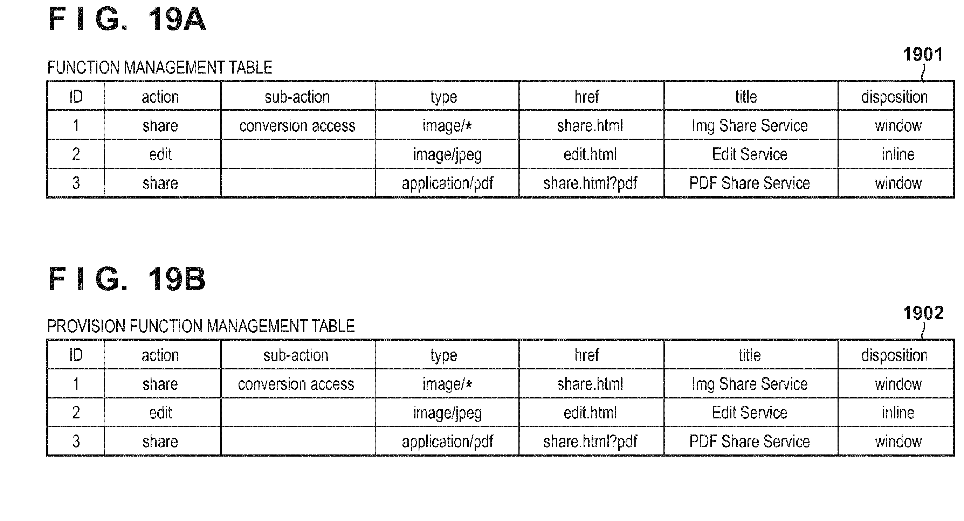

A function management table 1901 shown in Fig. 19A shows an example of the structure of a table managed by a service data storage unit 636 of a server 105 according to this embodiment, and is similar to the function management table 702 shown in Fig. 7B. Note that the table structure shown in Fig. 19A is an example, and a table structure different from that shown in Fig. 19A may be used. A sub-action field for holding the values of the sub-action attribute, which does not exist in the above-described function management table 702, is added to the function management table 1901 according to this embodiment.

A provision function management table 1902 shown in Fig. 19B shows an example of the structure of a table managed by a provision function storage unit 655 of an information processing terminal 102 according to this embodiment, and is similar to the provision function management table 704 shown in Fig. 7C. Note that the table structure shown in Fig. 19B is an example, and a table structure different from that shown in Fig. 19B may be used. A sub-action field for holding the values of the sub-action attribute, which does not exist in the provision function management table 704, is added to the provision function management table 1902.

### [Processing Sequence]

### (Registration Processing)

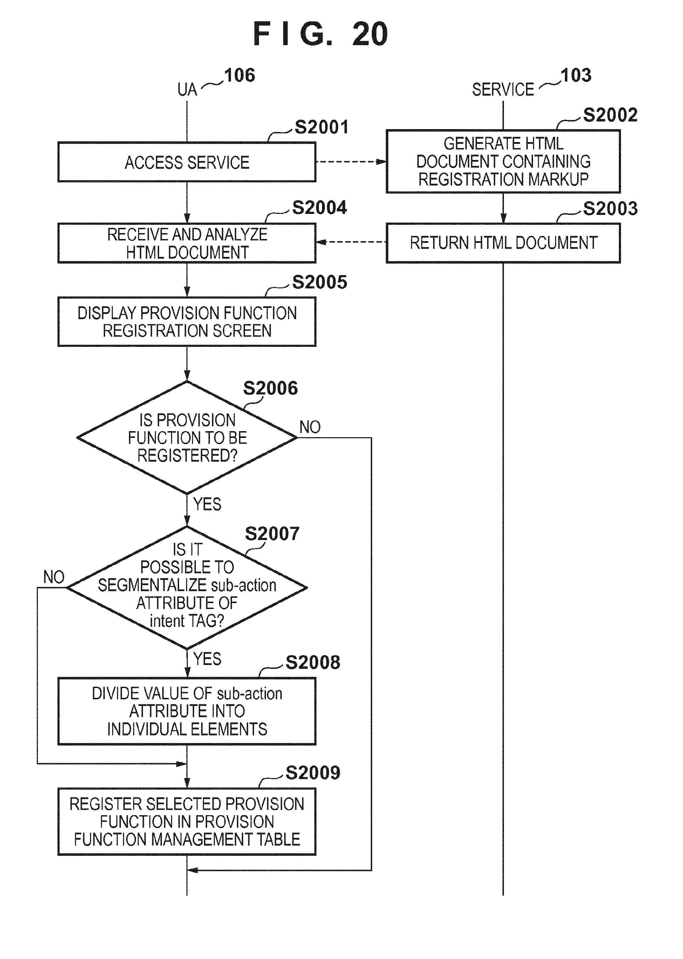

An operation (corresponding to the service provision function registration processing shown in Figs. 3A and 3B) in which the information processing terminal 102 accesses the service 103 of the server 105, and registers the provision functions of the service 103 in the UA 106 will be described with reference to a sequence chart shown in Fig. 20. The sequence shown in Fig. 20 is almost the same as that shown in Fig. 16 described in the second embodiment. Only steps different from those of Fig. 16 will be explained. Processes in step S2001 to S2006 are the same as those in steps S1601 to S1606 and a description thereof will be omitted.

Step S2007 corresponds to step S1607 of Fig. 16. In this embodiment, an attribute for which it is determined whether the attribute can be segmentalized is the sub-action attribute. Step S2008 corresponds to step S1608 of Fig. 16. In this embodiment, an attribute to be divided into individual elements is the sub-action attribute. Step S2009 corresponds to step S1609 of Fig. 16. The registration destination of the information of a provision function is the provision function management table 1902, and the individual elements divided in step S2008 are registered in the sub-action field.

### (Execution Processing)

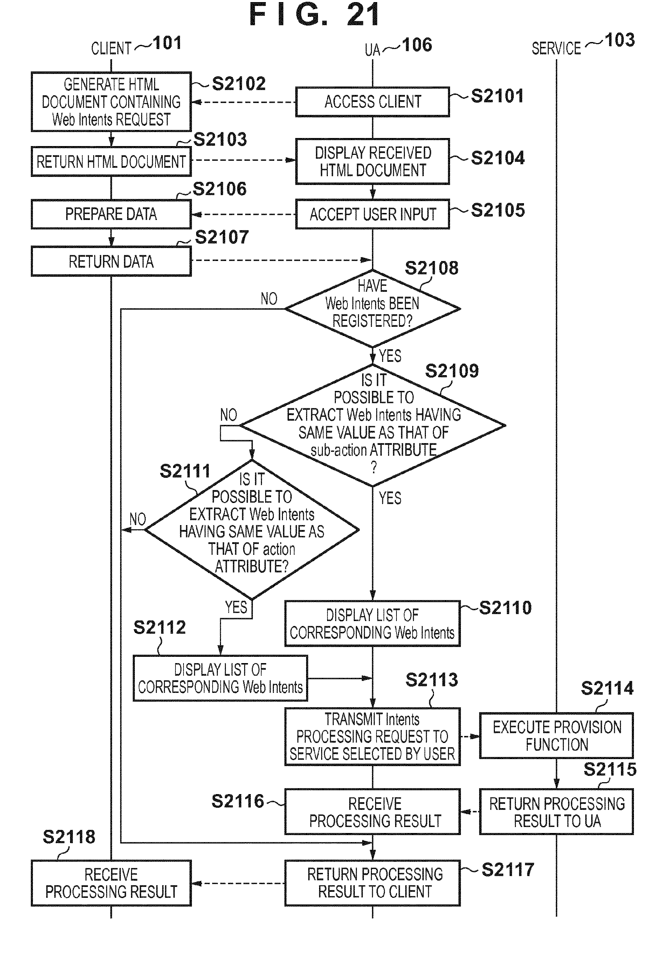

An operation (corresponding to the service provision function execution processing shown in Figs. 3A and 3B) in which the information processing terminal 102 accesses the client 101 of a server 104, and mediates an Intent processing request to the service 103 of the server 105 will be described with reference to a sequence chart shown in Fig. 21. The sequence shown in Fig. 21 is similar to that shown in Figs. 11A and 11B described in the first embodiment, and only steps different from those of Figs. 11A and 11B will be explained. Processes in steps S2101 to S2108 are the same as those in steps S1101 to S1108 and a description thereof will be omitted.

In step S2109, an analysis unit 653 determines whether an HTML document received in step S2104 contains the sub-action attribute. If the sub-action attribute is contained (YES in step S2109), the analysis unit 653 divides the value of the sub-action attribute into individual elements with respect to a separator such as a space (" "). A provision function management unit 654 determines whether it is possible to extract, from entries in the provision function management table 1902, an entry having the same values as those of all the elements of the sub-action attribute. Note that if there is no entry having the same values as those of all the elements, the provision function management unit 654 determines whether it is possible to extract an entry having the same values as those of some elements. If it is possible to extract such an entry (YES in step S2109), the process advances to step S2110; otherwise (NO in step S2109), the process advances to step S2111.

Similarly to step S1112 of Fig. 11B, in step S2110, a display unit 652 displays, in a list format, the entry extracted in step S2109 on the UA 106. An example of a screen displayed in step S2110 is the same as that shown in Fig. 13 described in the first embodiment and a description thereof will be omitted.

In step S2111, the provision function management unit 654 determines whether it is possible to extract, from the entries in the provision function management table 1902, an entry having the same value as that of the action attribute. If it is possible to extract such an entry (YES in step S2111), the process advances to step S2112; otherwise (NO in step S2111), the process advances to step S2117.

Similarly to step S1115 of Fig. 11B, in step S2112, the display unit 652 displays, in a list format, the entry extracted in step S2111 on the UA 106. An example of a screen displayed in step S2112 is the same as that shown in Fig. 13 and a description thereof will be omitted. Processes in steps S2113 to S2118 are the same as those in steps S1116 to S1121 and a description thereof will be omitted.

As described above, in the second embodiment, it is possible to obtain the same effects as those in the first embodiment.

### <Fourth Embodiment>

In this embodiment, a case will be described in which the provision function registration screen 1000 exemplified in Fig. 10 in the first embodiment is displayed on an information processing terminal having a small display area, such as a smartphone or table device.

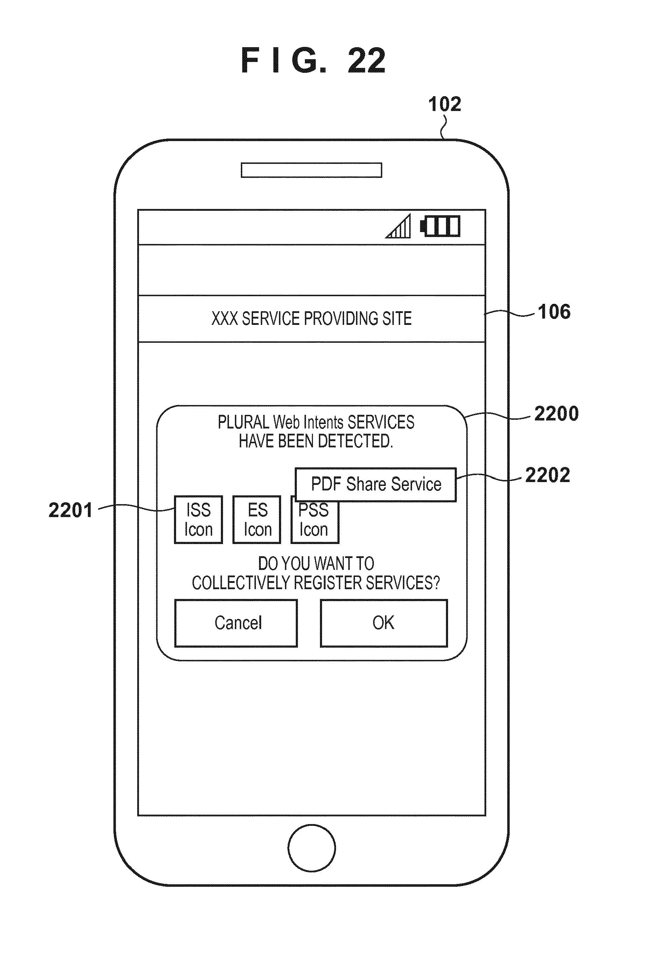

Fig. 22 shows an example of a provision function registration screen 2200 according to this embodiment. Referring to Fig. 22, an information processing terminal 102 is an information processing terminal such as a smartphone or tablet device, and a UA 106 is a UA such as a browser. The provision function registration screen 2200 is a provision function registration screen displayed on the UA 106.

Icons 2201 represent provision functions, and are transferred from a service 103 to the UA 106 when returning an HTML document (step S303/S803/S1603/S2003). As for the icons 2201, one icon may be provided for each service or each provision function. These icons are registered in advance. If one icon is provided for each service, when a link tag of a head tag in the returned HTML document is described as follows, the UA 106 can acquire icon files.
<link rel = "icon" href = "http://aaa.com/favicon.ico" type = "image/vnd.micronsoft.icon"/>

On the other hand, if one icon is provided for each provision function, when an attribute (for example, an icon attribute) for designating an icon file is described in an intent tag in the returned HTML document, the UA 106 can acquire the icon file. Information of the acquired icon can be managed by adding an icon field to a provision function management table 704, 1502, or 1902.

A tooltip 2202 is the tooltip of an icon, on which information stored in the title field of the provision function management table 704, 1502, or 1902 is displayed.

As described above, at the time of registering provision functions, by displaying a screen using icons and tooltips, it is possible to group the provision functions without impairing the user convenience even in an information processing terminal having a small display area.

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to the above-described embodiments, it is to be understood that the invention is not limited to the disclosed embodiments. It will of course be understood that this invention has been described above by way of example only, and that modifications of detail can be made within the scope of this invention.

## Claims

1. An information processing terminal (102) having a relay function of causing a client (101) for managing data and a service (103) for providing a function using the data managed by the client (101) to cooperate with each other via a network (107), **characterized in that** the terminal comprises:
receiving means (651) for receiving function information for calling the function provided by the service (103);
register means (654, 655) for executing registration processing of the function information by the relay function in accordance with first classification information indicating a category of the function, and second classification information indicating detail classification of the first classification information; and
providing means (654) for providing the function information registered by the registration processing to a user based on the second classification information.

2. The terminal according to claim 1, wherein the network is the Internet.

3. The terminal according to claim 1 or 2, wherein the client and the relay function are functions operating on a single apparatus.

4. The terminal according to any one of claims 1 to 3, wherein the second classification information is included in an area of the function information where a type of data processable by the function is defined.

5. The terminal according to any one of claims 1 to 3, wherein the second classification information is included in an area of the function information where the first classification information is defined.

6. The terminal according to any one of claims 1 to 3, wherein a new area is additionally provided in the function information, and the second classification information is included in the new area.

7. The terminal according to any one of claims 1 to 6, wherein the function information includes at least one piece of second classification information for each piece of first classification information.

8. The terminal according to any one of claims 1 to 7, wherein the first classification information in the function information is one of "share", "edit", "view", "pick", "subscribe", and "save".

9. The terminal according to any one of claims 1 to 7, wherein
the function information is indicated in an intent tag of Web Intents, and
the first classification information is information of an action attribute defined by Web Intents.

10. The terminal according to any one of claims 1 to 9, wherein said register means is configured to execute the registration processing according to a user input via a display screen using at least one of the first classification information and the second classification information included in the function information.

11. The terminal according to claim 10, wherein said register means is configured to group functions having identical pieces of the first classification information or identical pieces of the second classification information, and to display the display screen so as to allow user input for each group.

12. The terminal according to claim 11, wherein when displaying the grouped functions, said register means is configured to represent each of the functions included in the group by an icon.

13. The terminal according to any one of claims 10 to 12, wherein at the start or end of the relay function, said register means is configured to display the display screen for accepting a user input for the registration processing of the function information.

14. The terminal according to any one of claims 1 to 13, wherein the relay function is provided as a function of a browser or an OS of said information processing terminal.

15. A control method for an information processing terminal (102) having a relay function of causing a client (101) for managing data and a service (103) for providing a function using the data managed by the client (101) to cooperate with each other via a network (107), **characterized by** comprising:
receiving function information for calling the function provided by the service (103);
executing registration processing of the function information by the relay function in accordance with first classification information indicating a category of the function, and second classification information indicating detail classification of the first classification information; and
providing the function information registered by the registration processing to a user based on the second classification information.

16. A program which, when run on a device, causes the device to execute a method according to claim 15.
